# EUROPÄISCHE PATENTANMELDUNG

(11) **EP 1 763 213 A1**
(43) Veröffentlichungstag der Anmeldung: **14.03.2007**
(21) Anmeldenummer: 06018752.3
(22) Anmeldetag: 07.09.2006
(51) Int. Cl.: H04M 3/533

(54) **Verfahren und System zum Konvertieren von in einem Sprachnachrichtensystem hinterlassenen Nachrichten**

(30) Priorität: 09.09.2005 DE 102005042981
(71) Anmelder: Deutsche Telekom AG, 53113 Bonn (DE)
(72) Erfinder: Hasemann, Jörg-Michael, Dr., 27321 Emtinghausen (DE)

(57) **Zusammenfassung**

verfahren und System zur Steuerung eines in einem Telekommunikationsnetz integrierten Anrufbeantworters, bei dem durch den Nutzer über eine Fernabfrageschnittstelle die auf dem Anrufbeantworter eingegangenen Sprachnachrichten abgehört werden, wobei die Bedienung der Fernabfrageschnittstelle durch einen AB-Dienst-Server durchgeführt wird, indem der Anrufbeantworter durch den AB-Dienst-Server nach Identifikation und/oder Authentifizierung hinsichtlich zugriffsrechten nach aktuell eingegangenen Sprachnachrichten abgefragt wird, die bejahendenfalls an den AB-Dienst-Server akustisch übertragen werden und nachfolgend in ein standardisiertes Datenformat umgewandelt und in einer AB-Datenbank bereitgestellt werden.

## Beschreibung

Die vorliegende Erfindung betrifft ein Verfahren zur Steuerung eines in einem Telekommunikationsnetz integrierten Anrufbeantworters, bei dem durch den Nutzer über eine Fernabfrageschnittstelle die auf dem Anrufbeantworter eingegangenen Sprachnachrichten abgehört werden können. Weiterhin betrifft die Erfindung auch ein System, mit welchem ein solches Verfahren umgesetzt werden kann.

In einem Telekommunikationsnetz sind Anrufbeantworter bekannter Weise entweder endgeräteseitig in der Sphäre des Nutzers, beispielsweise als Zusatzgerät zur Telekommunikationsanlage, angeordnet; des weiteren kann ein Anrufbeantworter der hier interessierenden Art auch in der Sphäre des Netzwerkbetreibers, also netzseitig, angeordnet sein und dem Nutzer über das Telekommunikationsnetz lediglich funktional zur Verfügung stehen.

Anrufbeantworter sind Endgeräte, die parallel zu Telefonen geschaltet werden und die für den Fall, dass ein eingehender Anruf nicht mit Hilfe des parallelen Telefons angenommen werden kann, die Möglichkeit bieten, dass der Anrufer mit Hilfe des Anrufbeantworters zunächst eine vorher aufgezeichnete Abwesenheitsansage abhört und danach ggf. eine Sprachnachricht hinterlegen kann. Es ist bekannt, Anrufbeantworter so auszugestalten, dass diese zur Abfrage von eingegangenen Sprachnachrichten oder Aktivierung von Bedienungsfunktionen über eine durchgeschaltete Telefonleitung auch aus der Ferne bedient werden können. Dieses Leistungsmerkmal wird auch als Fernabfrage bezeichnet.

Die US 5,220,595 offenbart einen als Endgerät ausgebildeten Anrufbeantworter mit der Möglichkeit einer Fernabfrage. Zu diesem zwecke ist der Anrufbeantworter mit einer Fernabfrageschnittstelle ausgerüstet. Hierüber ist der Fernabfragemodus durch eine persönliche Identifikationsnummer (PIN) vor unbefugten externen Zugriff geschützt, die bei einem eingegangenen Anruf nach der Ausgabe einer Nachricht durch den Anrufbeantworter mit Hilfe von DTMF-Tönen (DTMF= Dual Ton Multi Frequency) zur Aktivierung des Fernabfragemodus eingegeben werden mss. Nach Eingabe der korrekten PIN wird der Nutzer aufgefordert, als Fernsteuersignal ein Sprachsignal einzugeben. Es existiert ein Satz vordefinierter Sprachsignale, mit denen jeweils eine bestimmte Funktion des Anrufbeantworters aktivierbar ist, wie beispielsweise Abhören der letzten Nachricht, Löschen derselben, schneller Vorlauf, etc.

Neben derartigen endgeräteseitigen Anrufbeantwortern sind im allgemeinen Stand der Technik auch Anrufbeantworter bekannt, welche netzseitig in der Sphäre des Netzwerkbetreibers angeordnet sind. Dies ist beispielsweise bei einem Mobilfunknetz als Telekommunikationsnetz die Regel. Auch derartige netzseitige Anrufbeantworter verfügen über eine Fernabfrageschnittstelle, die es erlaubt, die Inhalte des Anrufbeantworters von der Ferne her abzurufen, beispielsweise auch mit einem DTMF-fähigen Endgerät. Bei einer Kommunikation per DTMF-Tönen ist eine Identifizierung des Nutzers erforderlich. Hierzu tippt der Nutzer auf dem Tastenfeld des Endgeräts einen PIN ein und quittiert diese. Gelegentlich kann auf die Vorgehensweise verzichtet werden falls eine Authentifizierung netzseitig erfolgt. Hierbei identifiziert der Netzbetreiber das Endgerät automatisch und authentifiziert darüber die Nutzung des netzseitigen Anrufbeantworters. Anrufbeantworter im Netzbetreiberumfeld besitzen zwar Schnittstellen für Integrationszwecke (Fernabfrage), jedoch sind diese proprietär. Ein weiterer Nachteil des Standes der Technik besteht darin, dass eine Fernabfrage von Anrufbeantwortern gebunden ist an eine Sprachübertragung der eingegangenen Anrufe.

Es ist die Aufgabe der vorliegenden Erfindung ein Verfahren sowie ein System zu Steuerung eines in einem Telekommunikationsnetz integrierten Anrufbeantworters zu schaffen, mit welchem eine Bedienung über verschiedenartige Endgeräte möglich ist, wobei das Format der auszugebenden Sprachnachricht je nach dem benutzten Endgerät flexibel wählbar ist.

Die Aufgabe wird ausgehend von einem Verfahren gemäß dem Oberbegriff von Anspruch 1 in Verbindung mit dessen kennzeichnenden Merkmalen gelöst. Systemtechnisch wird die Aufgabe durch Anspruch 6 gelöst. Die jeweils rückbezogenen abhängigen Ansprüche geben vorteilhafte Weiterbildungen der Erfindung wieder.

Die Erfindung schließt die technische Lehre ein, dass die Bedienung der Fernabfrageschnittstelle eines Anrufbeantworters durch einen AB-Dienst-Server derart durchgeführt wird, dass der Anrufbeantworter durch den AB-Dienst-Server nach Identifikation und/oder Authentifizierung hinsichtlich Zugriffsrechten nach aktuell eingegangenen Sprachnachrichten abgefragt wird, die bejahendenfalls an den AB-Dienst-Server akustisch übertragen werden und nachfolgend in ein standardisiertes Datenformat umgewandelt und in einer Datenbank bereitgestellt werden.

Der Vorteil der erfindungsgemäßen Lösung besteht insbesondere darin, dass prorietäre Anrufbeantwortersysteme für neuartige Anwendungen - wie "Voicemail to E-mail" oder "Voicemail to MMS" geöffnet werden. Durch die erfindungsgemäße Lösung lassen sich zahlreiche fernabfragefähige Anrufbeantworter privater Nutzer in ein geschlossenes, zentrales Anwendungssystem integrieren. Das zentrale Anwendungssystem ermöglicht es dem Nutzer, von verschiedenartigen Endgeräten her - beispielsweise Mobilfunktelefon, PC, PDA-Fernabfragen des Anrufbeantworters durchzuführen. Als neuartige Anwendung ist es beispielsweise denkbar, einen Urlaubsdienst für Nutzer anzubieten, denen für die Zeit ihrer Abwesenheit die auf dem häuslichen Anrufbeantworter auflaufenden Sprachnachrichten auf das Mobilfunkendgerät in Form einer MMS oder dergleichen nachgesendet werden. Durch den erfindungsgemäßen AB-Dienst-Server ist aufgrund der Zentralisierung die Abfrage verschiedenartiger Anrufbeantworter, endgeräteseitig oder netzseitig, von der Vorgehensweise für den Nutzer gleich. Unterschiedlich sind lediglich die zu Authentifizierungszwecken zuvor per Parametrisierung im AB-Dienst-Server zu hinterlegenden Nutzer- und Gerätedaten.

Vorzugsweise wird die in ein standardisiertes Datenformat seitens des AB-Dienst-Servers umgewandelte Sprachnachricht als SMS/MMS oder als E-Mail an ein geeignetes Kommunikationsendgerät des Nutzers gesendet. Es ist denkbar, dass zuvor ein Benachrichtigung über eine auf den Anrufbeantworter neu eingegangene Sprachnachricht erfolgt, woraufhin der Nutzer dann die Übersendung der Sprachnachricht in der erfindungsgemäßen Form veranlassen kann. Des weiteren ist es auch denkbar, dass aufgelaufene, in das standardisierte Datenformat vom AB-Dienst-Server umgewandelte Sprachnachrichten eines Nutzers zunächst in der Datenbank des AB-Dienst-Servers zum späteren Abruf durch den Nutzer gespeichert werden.

Vor dem erfindungsgemäßen Einsatz des AB-Dienst-Server ist dessen Funktionsweise im Hinblick auf die Nutzerdaten sowie die gerätespezifischen Daten des zu überwachenden und abzufragenden Anrufbeantworters zu konfigurieren. Zur Konfiguration des AB-Dienst-Servers durch den Nutzer kann eine nutzerspezifische Parametrierung der Abfrageoptionen vorgenommen werden, in dem durch den Nutzer an einer clientseitigen Benutzeroberfläche eines PC's entsprechende Eingaben durchgeführt werden. Solche Eingaben können die Rufnummer des zu steuernden Anrufsbeantworters, die Authentifizierungsdaten des Nutzers und dergleichen umfassen. Die gerätespezifische Parametrierung der Abfrageoptionen kann hingegen nach Maßgabe vordefinierter Auswahloptionen auf der clientseitigen Benutzeroberfläche erfolgen. So können Gerätebezeichnungen oder Typen von Anrufbeantwortern zur Auswahl zur Verfügung gestellt werden. Der Nutzer wählt den Gerätetyp seines Anrufbeantworters aus, woraufhin der AB-Dienst-Server die dementsprechende gerätespezifische Parametrierung automatisch einstellt. Als gerätespezifische Parametrierung kann beispielsweise der Bedienungsalgorithmus der Fernabfrageschnittstelle des Anrufbeantworters eingestellt werden. Da die nutzerspezifische und gerätespezifische Parametrierung der Abfrageoptionen nutzer- bzw. anrufbeantworterabhängig ist, ist diese vor Inbetriebnahme einmal vorzunehmen.

Vorzugsweise ist der AB-Dienst-Server mit einem DTMF-TonGenerator ausgestattet, um die Fernabfrageschnittstelle des Anrufbeantworters per DTMF-Töne anzusteuern. Es ist jedoch auch denkbar, dass die Ansteuerung der Fernabfrageschnittstelle - je nach dem hier gewählten Standard - auf andere Weise erfolgen kann.

Des Weiteren ist es von Vorteil, dass der AB-Dienst-Server mit einem Spracherkennungsmodul ausgestattet ist, um vom Anrufbeantworter ausgegebene Sprachsignale automatisch zu erkennen und hinsichtlich der hiermit verbundenen Steuersituationen zuzuordnen. Beispielsweise kann der AB-Dienst-Server über ein Spracherkennungsmodul feststellen, ob überhaupt neuer Anrufe auf dem Anrufbeantworter vorhanden sind. Falls nicht, so erkennt das Spracherkennungsmodul beispielsweise aufgrund der Ansage des Anrufbeantworters "keine neuen Nachrichten" die entsprechende Steuersituation und kann daraufhin die Verbindung zum Anrufbeantworter abbrechen.

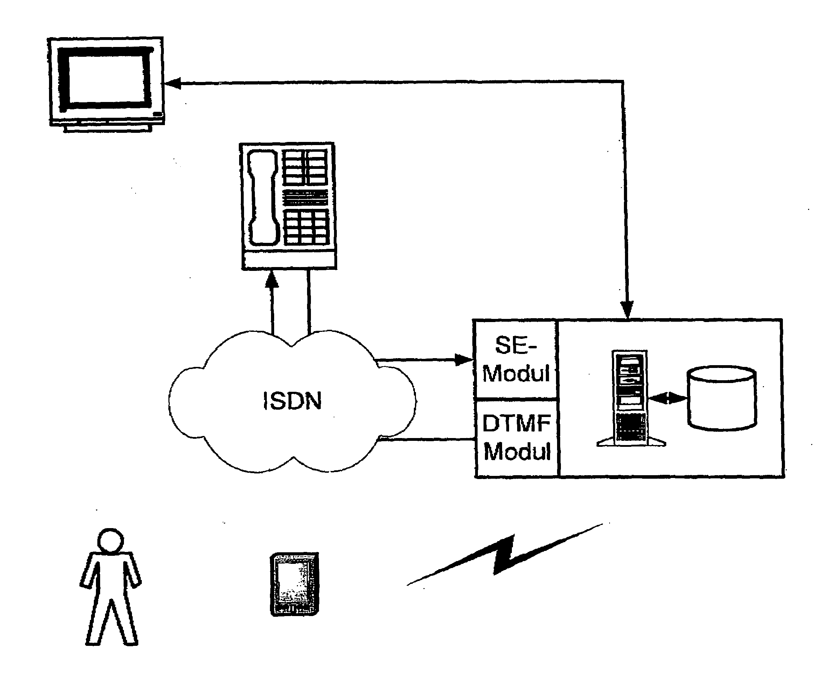

Weitere die Erfindung verbessernde Maßnahmen werden nachstehend gemeinsam mit der Beschreibung eines bevorzugten Ausführungsbeispiels der Erfindung anhand der einzigen Figur näher dargestellt.

Die Figur zeigt ein schematisches Blockschaltbild eines Systems zur Steuerung eines in einem Telekommunikationsnetz integrierten Anrufbeantworters.

Gemäß Figur ist ein Anrufbeantworter 1 an ein Telekommunikationsnetz 2 angeschlossen, welches hier als ISDN-Festnetz ausgebildet ist. Der Anrufbeantworter 1 verfügt über eine Fernabfrageschnittstelle 3. Über die Fernabfrageschnittstelle 3 hat der Nutzer 4 des Anrufbeantworters 1 die Möglichkeit, eingegangene Sprachnachrichten aus der Ferne abzuhören.

Zur Bedienung der Fernabfrageschnittstelle 3 ist ein ebenfalls im Telekommunikationsnetz 2 eingebundener AB-Dienst-Server 5 vorgesehen. Der AB-Dienst-Server 5 fragt über das Telekommunikationsnetz 2 den Anrufbeantworter 1 nach aktuell eingegangenen Sprachnachrichten ab. Hierfür ist zuvor eine Identifikation und/oder Authentifizierung hinsichtlich der Zugriffsrechte erforderlich. Die Identifizierung und Authentifizierung nimmt der Nutzer 4 über eine clientseitige Bedienoberfläche 6 vor. Die Benutzeroberfläche 6 ist Bestandteil eines PC's (Personal Computer) und steht über das Internet mit dem AB-Dienst-Server 5 in Verbindung. Die Parametrierung der Abfrageoptionen des AB-Dienst-Servers 5 für den Anrufbeantworter 1 des Nutzers 4 wird über eine vorgegebene Eingabemaske vorgenommen. Hierbei erfolgt eine gerätespezifische Parametrierung nach Maßgabe vordefinierter Auswahloptionen, mit welchen der Gerätetyp des Anrufbeantworters 1 definierbar ist. Über die Auswahl des Gerätetyps des Anrufbeantworters 1 ist dem AB-Dienst-Server 5 das Protokoll für den Verbindungsaufbau und Durchführung der Kommunikation mit dem Anrufbeantworter 1 bekannt. Des Weiteren nimmt der Nutzer 4 über die clientseitige Benutzeroberfläche 6 auch eine nutzerspezifische Parametrierung der Abfrageoptionen des Anrufbeantworters 1 vor. Als nutzerspezifischer Parameter wird beispielsweise die Telefonnummer vorgegeben unter welcher der Anrufbeantworter 1 zu erreichen ist, sowie die Zugangsdaten (PIN) zur Fernabfrage.

Der AB-Dienst-Server 5 kommuniziert mit dem Anrufbeantworter 1 über ein DTMF-Modul 7. Das DTMF-Modul 7 dient der Erzeugung von standardisierten DTMF-Tönen, mit welchen die Fernabfrageschnittstelle 3 des Anrufbeantworters 1 ansteuerbar ist. Die von dem Anrufbeantworter 1 ausgegebenen Sprachsignale werden vom AB-Dienst-Server 5 über ein hierin integriertes Spracherkennungsmodul 8 interpretiert. Über eine Interpretation der Sprachsignale mittels , Spracherkennungsmodul 8 ist der AB-Dienst-Server 5 in der Lage, die aktuelle Steuersituation des Anrufbeantworters 1 zu erkennen. Wird vom Anrufbeantworter 1 beispielsweise die Sprachnachricht "keine aktuelle Mitteilung auf dem Anrufbeantworter" nach Verbindungsaufbau ausgegeben, so lässt sich diese Sprachnachricht über das Spracherkennungsmodul 8 entsprechend interpretieren, so dass der AB-Dienst-Server 5 daraufhin die Verbindung zum Anrufbeantworter 1 abbrechen kann.

Nach Verbindungsaufbau des AB-Dienst-Servers 5 mit dem Anrufbeantworter 1 werden eingegangene aktuelle Sprachnachrichten akustisch von Anrufbeantworter 1 auf den AB-Dienst-Server 5 übertragen. Der AB-Dienst-Server 5 wandelt die akustische Sprachnachricht daraufhin in ein standardisiertes Datenformat zur Bereitstellung für den Nutzer 4 um. Das gewünschte Datenformat ist von der Art des Endgerätes abhängig, mit welchem der Nutzer 4 die vom AB-Dienst-Server abgerufenen Sprachnachrichten seines Anrufbeantworters 1 empfangen möchte. Das gewünschte standardisierte Datenformat ist im Rahmen der vorstehend beschriebenen gerätespezifischen Parametrierung durch den Nutzer 4 auswählbar: Als standardisiertes Datenformat eignet sich wav, mp3, amr und dergleichen.

Die Bereitstellung der so umgewandelten eingegangenen Sprachnachrichten erfolgt durch die AB-Datenbank 9 des AB-Dienst-Servers 5. Hierin kann die SpraChrlachricht zum späteren Abruf durch den Nutzer 4 abgespeichert bleiben. Wählt der Nutzer 4 jedoch die Option einer sofortigen Weiterleitung an ein ihm zugeordnetes Endgerät 10, so wird die beispielsweise in ein wav-Format umgewandelte Sprachnachricht per MMS an das Kommunikationsendgerät 10 des Nutzers 4 gesendet. Das Kommunikationsgerät 10 des Nutzers 4 ist im vorliegenden Ausführungsbeispiel als mobiles Endgerät (PDA) ausgebildet.

Die Erfindung ist nicht beschränkt auf das vorstehend beschriebene exemplarische Ausführungsbeispiel. Es sind vielmehr auch Abwandlungen hiervon denkbar, welche vom Schutzbereich der nachfolgenden Ansprüche umfasst sind. So ist die Umwandlung und Absendung der Sprachnachricht des Anrufbeantworters 1 durch den AB-Dienst-Server 5 nicht allein auf das MMS-Protokoll beschränkt. Die vom AB-Dienst-Server 5 abgerufene Sprachnachricht kann beispielsweise auch in einen Text umgewandelt werden und dem Nutzer 4 per SMS oder als E-Mail übertragen werden. Genauso ist es auch möglich, eine in ein wav-Format oder dergleichen umgewandelte akustische Sprachnachricht als Dateianhang einer E-Mail an das insoweit E-mailfähige Kommunikationsendgerät 10 des Nutzers 4 zu übertragen. Des Weiteren ist die Kommunikationsschnittstelle des AB-Dienst-Servers 5 zum Anrufbeantworter 1 nicht allein auf ein DTMF-Modul 7 sowie ein Spracherkennungsmodul 8 beschränkt. Die Wahl der Kommunikationsschnittstelle richtet sich nach der beim Anrufbeantworter 1 verwendeten Fernabfrageschnittstelle und ist hieran anpassbar.

### Bezugszeichenliste

- 1: Anrufbeantworter
- 2: Telekommunikationsnetz
- 3: Fernabfrageschnittstelle
- 4: Nutzer
- 5: AB-Dienst-server
- 6: Benutzeroberfläche
- 7: DTMF-Modul
- 8: Spracherkennungsmodul
- 9: AB-Datenbank
- 10: Kommunikationsendgerät (PDA)

## Patentansprüche

1. Verfahren zur Steuerung eines in einem Telekommunikationsnetz (2) integrierten Anrufbeantworters (1), bei dem durch den Nutzer (4) über eine Fernabfrageschnittstelle (3) die auf dem Anrufbeantworter (1) eingegangenen Sprachnachrichten abgehört werden,
**dadurch gekennzeichnet, dass** die Bedienung der Fernabfrageschnittstelle (3) durch einen AB-Dienst-Server (5) durchgeführt wird, indem der Anrufbeantworter (1) durch den AB-Dienst-Server (5) nach Identifikation und/oder Authentifizierung hinsichtlich Zugriffsrechten nach aktuell eingegangenen Sprachnachrichten abgefragt wird, die bejahendenfalls an den AB-Dienst-Server (5) akustisch übertragen werden und nachfolgend in ein standardisiertes Datenformat umgewandelt und in einer AB-Datenbank (9) bereitgestellt werden.

2. Verfahren nach Anspruch 1,
**dadurch gekennzeichnet, dass** die in ein standardisiertes Datenformat umgewandelte Sprachnachricht als SMS/MMS oder als Email an ein Kommunikationsendgerät (10) des Nutzers (4) gesendet wird.

3. Verfahren nach Anspruch 1,
**dadurch gekennzeichnet, dass** aufgelaufende, in ein standardisiertes Datenformat umgewandelte Sprachnachrichten eines Nutzers (4) in der AB-Datenbank (9) des AB-Dienst-Servers (5) zum späteren Abruf durch den Nutzer (4) gespeichert werden.

4. Verfahren nach Anspruch 1,
**dadurch gekennzeichnet, dass** zur Konfiguration des AB-Dienst-Servers (5) durch den Nutzer (4) eine nutzerspezifische Parametrierung der Abfrageoptionen vorgenommen wird, indem durch den Nutzer (4) an einer clientseitigen Benutzeroberfläche (6) entsprechende Eingaben, umfassend Rufnummer des zu steuernden Anrufbeantworters (1) und Authentifizierungsdaten des Nutzers (4), durchgeführt werden.

5. Verfahren nach Anspruch 1,
**dadurch gekennzeichnet, dass** zur Konfiguration des AB-Dienst-Servers (5) durch den Nutzer (4) eine gerätespezifische Parametrierung der Abfrageoptionen vorgenommen wird, indem durch den Nutzer (4) an einer clientseitigen Benutzeroberfläche (6) nach Maßgabe von vordefinierten Auswahloptionen der richtige Gerätetyp des Anrufbeantworters (1) ausgewählt wird.

6. System zur Steuerung eines in einem Telekommunikationsnetz (2) integrierten Anrufbeantworters (1), wobei durch den Nutzer (4) über eine Fernabfrageschnittstelle (3) die auf dem Anrufbeantworter (1) eingegangenen Sprachnachrichten abhörbar ist,
**dadurch gekennzeichnet, dass** zur Bedienung der Fernabfrageschnittstelle (3) ein ebenfalls im Telekommunikationsnetz (2) eingebundener AB-Dienst-Server (5) vorgesehen ist, der den Anrufbeantworter (1) nach Identifikation und/oder Authentifizierung hinsichtlich Zugriffsrechten nach aktuell eingegangenen Sprachnachrichten abfragt, um diese bejahendenfalls an den AB-Dienst-Server (5) akustisch zu übertragen und in ein standardisiertes Datenformat zur Bereitstellung für den Nutzer (4) in einer AB-Datenbank (9) umzuwandeln.

7. System nach Anspruch 6,
**dadurch gekennzeichnet, dass** die Fernabfrageschnittstelle (3) des Anrufbeantworters (1) per DTMF-Töne ansteuerbar ist, wobei der AB-Dienst-Server (5) zur Kommunikation hiermit ein DTMF-Modul (7) umfasst.

8. System nach Anspruch 6,
**dadurch gekennzeichnet, dass** der AB-Dienst-Server (5) ein Spracherkennungsmodul (8) aufweist, um vom Anrufbeantworter (1) ausgegebene Sprachsignale zu erkennen und hinsichtlich der hiermit verbundenen Steuersituation zuzuordnen.

9. System nach Anspruch 6,
**dadurch gekennzeichnet, dass** der AB-Dienst-Server (5) hinsichtlich einer nutzerspezifischen und gerätespezifischeri Parametrierung über eine clientseitig beim Nutzer (4) bereitgestellte Bedienoberfläche (6) konfigurierbar ist.

10. System nach Anspruch 6,
**dadurch gekennzeichnet, dass** der Anrufbeantworter (1) endgeräteseitig in der Sphäre des Nutzers (4) angeordnet ist (Fig.).

11. System nach Anspruch 6,
**dadurch gekennzeichnet, dass** der Anrufbeantworter netzseitig in der Sphäre des Netzwerkbetreibers angeordnet ist und dem Nutzer (4) über das Telekommunikationsnetz (2) funktional zur Verfügung steht.
